# EUROPEAN PATENT APPLICATION

(11) **EP 2 337 018 A1**
(43) Date of publication of application: **22.06.2011**
(21) Application number: 10192465.2
(22) Date of filing: 24.11.2010
(51) Int. Cl.: G10H 1/36

(54) **A method and system for a "Karaoke Collage"**

(30) Priority: 24.11.2009 US 263843 P
(71) Applicant: TuneWiki Limited, Road Town, Tortola (VG)
(72) Inventor: Sarig, Amnon, Milpitas, CA 95035 (US); Cohen, Rani, 69367, Tel-Aviv (IL)
(74) Representative: Ahmad, Sheikh Shakeel

(57) **Abstract**

The present invention provides a computerized method and system for creating a karaoke collage performance. The invention allows a user to allocate segments of a selected song to various singers separated by distance, and to automatically combine all recordings performed of these segments to form a single karaoke performance termed a "karaoke collage".

## Description

### FIELD OF THE INVENTION

The present invention relates generally to synchronized playback of media, and more particularly to a method and a system for recording of karaoke singing by one or more participants separated by distance, and combining recorded tracks based on a root music source file on which participants record audio and/or video files synchronized to the root music source.

### BACKGROUND OF THE INVENTION

An amateur singer may wish to record himself singing karaoke and may wish to have one or more friends participate in singing, even though distance may separate the performers. The performers may be present at various locations within a city or country, so that it is difficult to record their voices at a single recording instance, at a single location. The present invention provides a method and system for overcoming the difficulties involved in obtaining and synchronizing several recorded karaoke performances, into a single finished audio or audiovisual performance.

Harmony singers sing in tune together as a single instrument, creating chords. Done well, it sounds as if there is one voice. The challenge for many people is to hear the separate voices when listening to existing recordings or hearing live performances. Once one can pick out the 'lead' parts versus the 'harmony' parts, it becomes easier to emulate them.

In blending voices, the person singing the 'lead' part may be far too loud and the person singing the 'harmony' part is very quiet (a compressor can help), and one needs to address that, otherwise there is not much of anything to blend. When this situation occurs, one may find it in a single passage (with only one note causing the problem), or it may occur in many places. If it only occurs once, either the 'lead' vocalist or the 'harmony' vocalist needs to know why it's too loud or too quiet. The ability to work a microphone (moving closer or further away as one anticipates volume level) can make a big difference - this is a learned skill and takes a lot of practice and self control. Alternately shifting the problem note up or down an octave may also address the issue. If the whole passage is causing problems, using a different chord note might be in order, or possibly shifting the key up or down to match the vocalists ability is in order. If one is recording this, it is possible to downshift the vocals by as much as 5% for the recording and then bring it back up for the final mix - To some people, this is considered cheating, but one hears the results of this all the time in popular recordings.

It would be advantageous to provide a method and system for recording and sharing karaoke singing experiences. It is an object of the present invention to provide a method and system for obtaining karaoke recordings from more than one source, and for synchronizing them into a single unified performance. The final unified performance may be provided to all performers in a digital format.

### SUMMARY OF THE INVENTION

Accordingly, it is a principal object of the present invention to enable use of a mobile communication device, laptop computer, Personal Computer (PC), PC camera or video camera, or portable digital media player, to record a karaoke performance, and to send the audio or audiovisual performance to participating friends.

It is another principal object of the present invention to provide application software that will combine the various audio/audiovideo files into a single synchronized performance, including recorded input from each of the participants. The performance is arranged by the software in appropriate chronological order, according to the correct timing and sequence. The resultant audio/audiovideo clip, termed a "karaoke collage", is sent by a central server loaded with the software of the invention, to all participants.

It is a further principal object of the present invention to achieve an end-product audio and/or video file, which is a result of an automated process where the timing is central and based on a root music source file on which all participants record audio and/or video files and are synchronized to the root music source.

It is still a further principal object of the present invention to enable a user/initiator to record either him/herself only or to send the root music source file to friends.

If participating users are first-time users, a hyperlink may be provided to them along with the root music source file, allowing them to download the application software onto their electronic device.

The method also includes recording by all participants of the parts while singing and or playing each part allocated by the initiator and sending files recorded by the other participants back to the initiator. Finally the method includes automatically putting all parts together by the application as a new cover performance and sending the new cover performance back to the participants.

The initiator can control and allocate solo singing parts between his friends, and assign parts that will be an 'all singing together now' chorus. Each friend does the parts allocated by the initiator.

The files come back to the initiator and are automatically put together as a new cover performance. Then the initiator can use it in many ways: send it as a new cover composition to the participating friends, to other friends, or optionally to be published in a competition to be arranged by a host Website. It becomes a new cover performance.

In an exemplary embodiment, a subscriber receives the background music and lyrics of a song, then records himself singing his part. He then sends the recording to his friends. If they are not subscribers, a link to download the application will be sent to them. Then they can use the software to do their part, and eventually they will hear the final result. Once they have the application handy and have used it, optionally they will use it again to start their own karaoke collage with other friends. Every song can become a new masterpiece.

Also, upon sending the final song to other friends, the song comes with a link to the application.

The invention is implemented cross platform, so that subscribers on any operating system for Mobile Device or PC; can exchange files between them. (E.g. Android™, iPhone™ and Symbian™).

Optionally, it will be feasible to crowd source new masters by having a database of fractions of songs sung by different people. The tracks can be mixed by a central server hosting a Website, or by the community, into a mesh of performances by different people into one complete new cover performance, which is built from the fractions of performances generated by the karaoke collage process.

The result can be an audio, video or a music video.

In the present invention, the term "electronic device" useful for recording a karaoke performance, refers to any device adapted to store audio or audiovisual data, including the following non-limiting examples: a mobile phone, a PDA, a PC, a laptop, a portable media player, a digital video camera, and a tape recorder storing audio performances in digital format.

Most typically, it will be convenient to use a single electronic device to perform most aspects of the invention: A PDA may be used to record the performance, allocate all segments and disseminate them as electronic mail to the participants. One example of a suitable PDA is an iPhone TM, manufactured by Apple TM.

However, more than one electronic device may be utilized in performance of the invention, even by a single user. For instance, a user may utilize a portable media player, such as an iPod TM (by Apple TM), to record his karaoke performance, and then may download the performance to his PC to send it by electronic mail to other participants.

Additionally, various participants may utilize different electronic devices to record their performances. The software of the invention, can overcome differences in formats which may arise, and may nevertheless combine all recordings into a single karaoke collage product. The software of the invention is typically run on a central server hosting a website for the invention.

The term "karaoke collage" used in the present invention, refers to a single audio or audiovisual performance product, created using the invention, to combine more than one karaoke performance into a single synchronized karaoke performance. Typically two or more karaoke singers have recorded themselves, at different locations, and the recordings have been combined by the software of the invention into a single performance, termed a "karaoke collage'.

The term "root music source file" for a particular song, refers to the background music, lyrics and segment timing information of all parts of a song. The term "segment timing information" refers to the timing duration of each of verse 1, chorus 1, verse 2, chorus 2, etc., for a specific song.

The term "computer-readable storage medium" refers to any type of medium to which data may be saved and later retrieved for handling, using a computer. Examples include, but are not limited to, a hard drive, floppy disk, CD, DVD, or flash memory.

There has thus been outlined, rather broadly, the more important features of the invention in order that the detailed description thereof that follows hereinafter may be better understood. Additional details and advantages of the invention will be set forth in the detailed description, and in part will be appreciated from the description, or may be learned by practice of the invention.

### BRIEF DESCRIPTION OF THE DRAWINGS

For a better understanding of the invention with regard to the embodiments thereof, reference is now made to the accompanying drawings, in which like numerals designate corresponding elements or sections throughout, and in which:
Fig. 1 a is a screen-shot illustrating selection of a song from a list by a karaoke collage initiator, constructed in accordance with the principles of a preferred embodiment of the present invention;
Fig. 1b is a screen-shot illustrating the karaoke collage organization procedure by the initiator, constructed in accordance with the principles of a preferred embodiment of the present invention;
Fig. 2 is a mixing/editing implementation screen-shot illustrating karaoke collage distribution to one of the participants, constructed in accordance with the principles of a preferred embodiment of the present invention; and
Fig. 3 is an exemplary flow chart illustrating the steps for creating a karaoke collage, constructed in accordance with the principles of a preferred embodiment of the present invention.

### DETAILED DESCRIPTION OF AN EXEMPLARY EMBODIMENT

The principles and operation of a method and an apparatus according to the present invention may be better understood with reference to the drawings and the accompanying description, it being understood that these drawings are given for illustrative purposes only and are not meant to be limiting.

In general, the present invention allows a user to create and record a karaoke performance involving more than one performer separated by distance. Each performer receives the background music, lyrics, and segment timing information, which comprise the "root music source file". Each performer is assigned specific portions of a song. The performer then records his portion at his convenience, and sends it to a central server running the software of the invention. The different recorded portions are coalesced by the software of the invention to a single performance, which is then sent to all performers. The karaoke performance may be audio or audiovisual, depending on the electronic recording devices available to the various users.

Optionally, portions of the song may be assigned to the original (famous) performing artist, so that a user may record himself singing karaoke with the original performing artist.

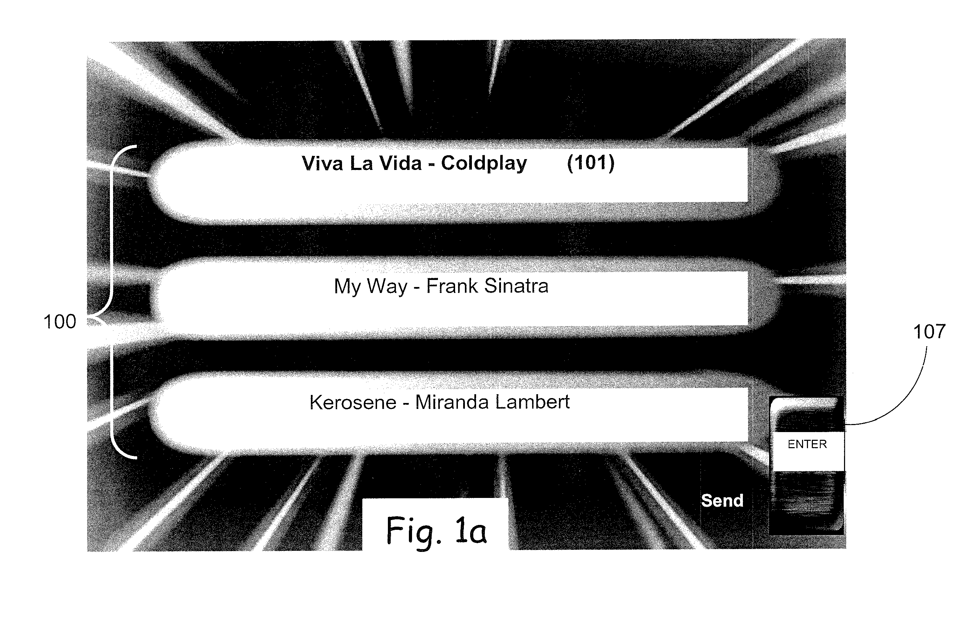

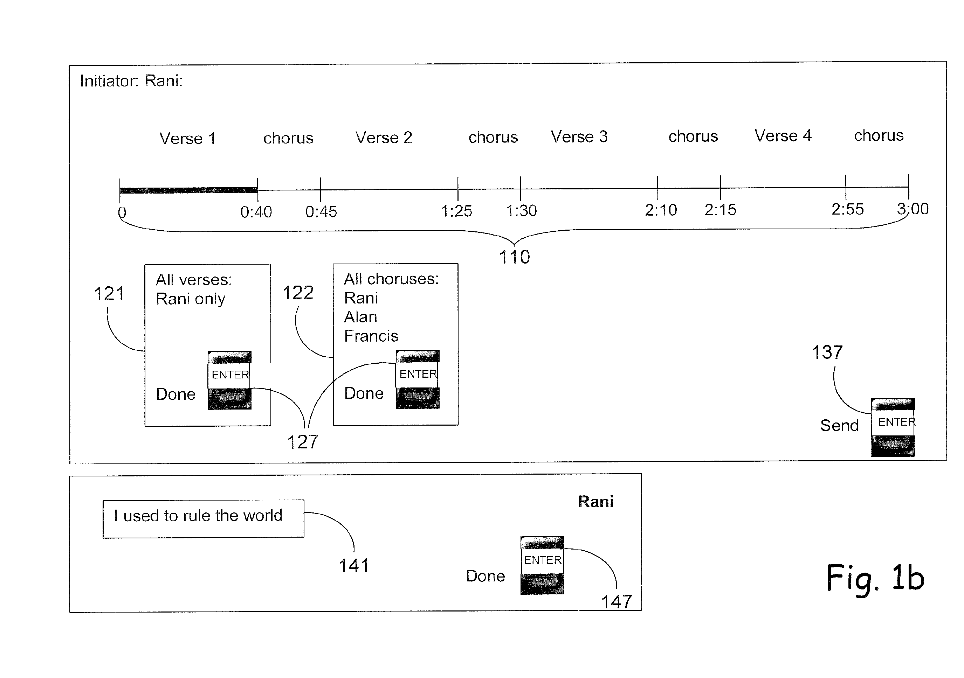

Fig. 1 a is a screen-shot illustrating the first step of the use of the present invention in accordance with the principles of a preferred embodiment. A user, also termed a "karaoke collage initiator", is presented with a list 100 of songs, from which he may select a particular song 101 which he desires to perform as karaoke.. Once song 101 has been selected, the initiator clicks a "send/enter" button 107 in order to send the song request, to a dedicated server running software of the invention. The server will provide the user with the root music source file, which contains the background music and displayable lyrics. Background music is typically in digital format, and may optionally include a video file of the original performance artist.

Fig. 1b is a screen-shot illustrating the karaoke collage organization procedure which is sent to the initiator, for dividing up and allocating segments of a particular song among various karaoke participants.. A timeline 110 shows the beginning and ending times of each segment of the song. Such segments refer for example, to "verse 1 ", "chorus", "verse 2", "chorus 2" etc.

Using the software application of the invention, a user, also termed a "karaoke initiator", may select any segment and using a drop-down menu (not shown), may assign the segment to one or more specific participating friends. The software will obtain the e-mail address for each friend from the user's electronically stored address book.

After completion of each allocation 121 and 122, the respective "done" 127 button is clicked. Optionally, each verse and chorus can be allocated individually.

When all segments of the song are assigned, the initiator clicks the "send" button 137 in order to send the song for collage distribution. The timeline is then sent to each participant. The participant will also be sent the relevant root music source file, to allow him to hear the background music, to prepare and record his karaoke performance of his assigned segments.

Each participant's assigned segments are highlighted or otherwise clearly indicated in the timeline he receives.

In the example timeline shown in Fig, 1b, reference block 121 shows allocation of "all verses" to a single participant named "Rani". Reference block 122 shows allocation of "all choruses" to three participants, named Rani, Alan and Francis.

Once a user receives a completed timeline with all segments allocated to individual karaoke participants, he may begin to record himself performing his allotted segments. He initiates playback of the root music source file he has received, and sings his allotted segments at the proper moments. Reference block 141, shown at the lower portion of Fig. 1b, displays the lyrics of Verse 1, while Rani sings and records himself on his electronic device. Simultaneously, in timeline 110 (shown at the top of Fig. 1b), Verse 1 remains highlighted, to indicate to the participant which portion of the song is now being recorded. As the song continues, "chorus 1" will become highlighted, and the lyrics will be displayed below in reference block 141. In the present example, participant Rani will continue to record himself singing this chorus 1, as he has been among those allocated "all choruses" in reference block 122.

The musical background typically plays as each singer sings and adds his part in separate locations.

Optionally two or more singers can perform at any particular location. Completion of recording of each segment or of an entire performance by one of the participants, is performed by clicking the "done" button 147, whereupon the recording is sent to a central repository at the server Web site. Recordings arrive from the various participants, and are recognized as belonging to a single initiated karaoke performance. The recordings are meshed by the software at the central repository, according to the timeline indicated by the initiator.

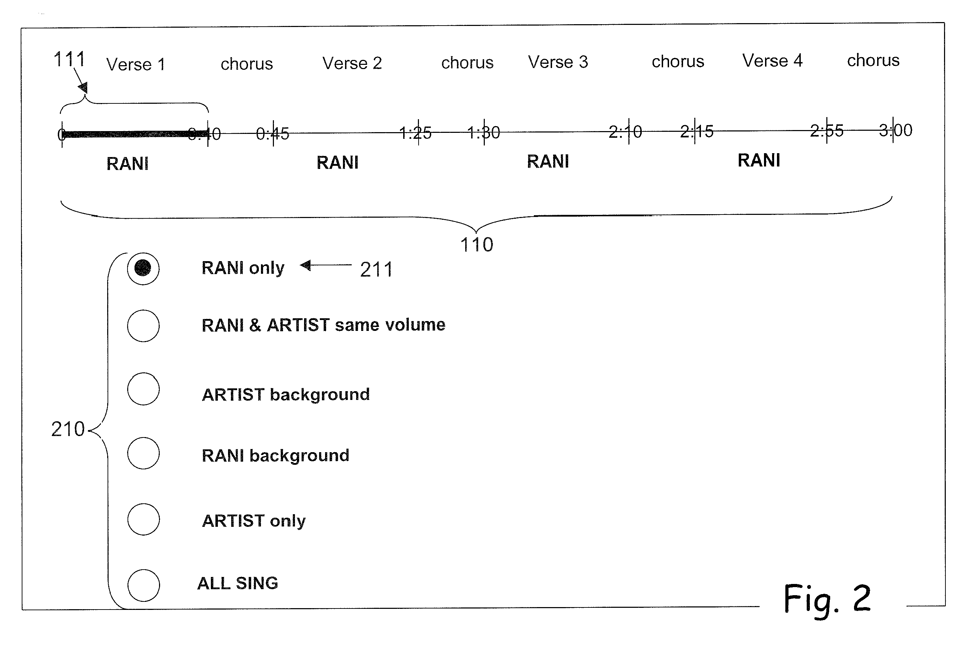

Fig. 2 is a mixing/editing implementation screen-shot 210 illustrating karaoke collage distribution to one of the participants, constructed in accordance with the principles of a preferred embodiment of the present invention. Timeline 110 is shown with the first verse highlighted 111.

The software of the invention identifies through use of timing metadata, where in the performance each singer's segment is meant to be inserted. Examples of timing data for which respective metadata is formed, are illustrated in the timeline 111 of Fig.2, namely timing of the segments: 0-0.4 (verse 1), 0.4-0.45 (chorus), 0.45-1.25 (verse 2), etc.

Fig.2 is an example where the initiator, "Rani only" 211 has been selected from a list of some of the possible mixing levels 210 for verse 1. Therefore in the final resultant karaoke collage performance, only Rani's voice will be heard signing verse 1 along with the background music. In one embodiment, the additional singers need not record or send back to the initiator, any segments which were not allocated to them, as the software identifies through metadata where to insert each segment to form the final performance.

When more than one participating singer are allocated to the same segment, such as "Rani & Artist" and "All sing" (in Fig. 2), the software of the invention is adapted to automatically mix the singing parts so that the volume level of each singer is optimized, and all participants will be heard. Thus in Fig.2, "Rani & Artist" are shown to have "same volume".

The parts assigned for each singer are highlighted in the version sent to that singer. Song files may be audio, video or audio/video

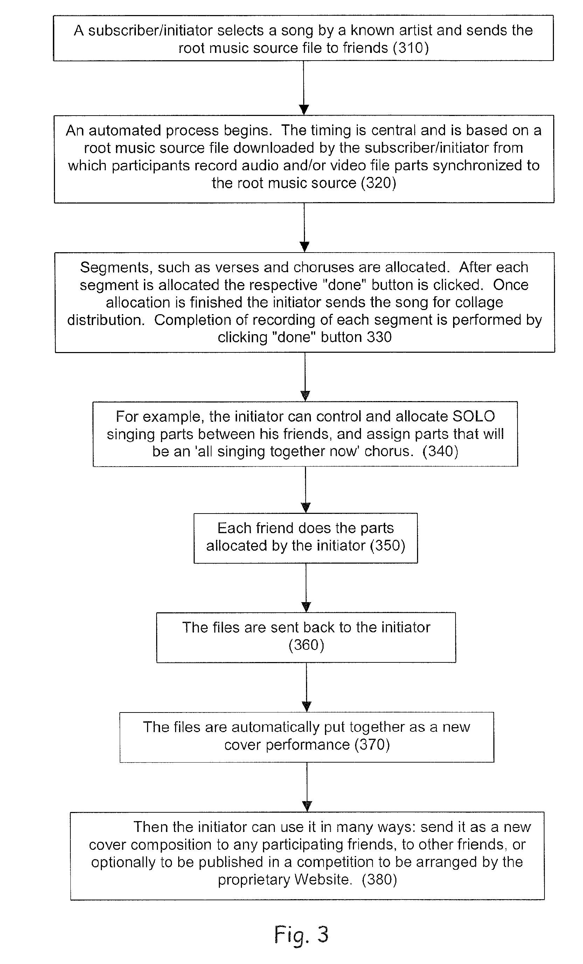

Fig. 3 is an exemplary flow chart illustrating the steps for creating a karaoke collage, constructed in accordance with the principles of a preferred embodiment of the present invention. A subscriber/initiator selects a song, generally by a known artist, and sends the root music source file to friends 310. An automated process begins. The timing is central and is based on a root music source file downloaded by the subscriber/initiator. 320.

Segments, such as verses and choruses, are allocated 330. After each segment is allocated the respective "done" button is clicked. Once allocation is finished the initiator sends the allocation timeline and the root music source file, for collage distribution. Completion of allocation of each segment is performed by clicking the "done" button 330. For example, the initiator can control and allocate solo singing parts between his friends, and assign parts that will be an 'all singing together now' chorus 340.

Each friend does the parts allocated by the initiator 350 the files are sent back to the initiator 360. The files are automatically put together as a new cover performance 370. Then the initiator can use it in many ways: send it as a new cover composition to any participating friends, to other friends, or optionally to be published in a competition to be arranged by the Website 380.

Creation of a karaoke collage using the principles of the invention may be performed using one or more electronic device to obtain the software or to obtain access to a website loaded with the software of the invention. Examples of electronic devices include: a personal computer, a laptop, a mobile phone, and a PDA. Additionally, any electronic device may be used which is capable of communicating with a remote server; the remote server supports a database of root music source files and has been previously uploaded with the software of the invention.

In certain embodiments, one may envision use of the invention with personal media players adapted to play an audio or an audiovisual digital media presentation. A user may view the final karaoke collage product on a handheld portable media player; however dissemination of the allocation timeline and music root source file to the various participating karaoke singers requires either wireless or wired communication with all participants. Similarly, the plurality of recorded karaoke performances must be returned to a central processing location, so that the software may combine the individual performances into a single final karaoke collage product.

The software of the invention, which allows for instance, allocation of song segments to various participants, may be provided to a user for downloading and executing upon his personal electronic device (e.g. upon his PDA or PC). Alternatively, a user may use his electronic device to access a website hosted by a server which runs the application. The server will have access to the root music source files, and will additionally execute the invention, namely allow a user to select a song, allocate segments to participants. Similarly, the website will allow electronic dissemination of the segments to the participants, and will recognize them as belonging to a single performance upon their return as recorded karaoke performances. The website will run the mixing and synchronization software to combine all parts into a single unified and audible karaoke collage performance. The performance may be posted on the website should the user indicate so, or only be returned to participants.

Software and hardware of the invention may include: A user interface, one or more processors, a memory, storage, card interface(s), networking device, and a power source.

The processor(s) may provide the processing capability required to execute the operating system, programs, user interface, and any other functions of the device. The processor(s) may include one or more microprocessors, such as one or more "general-purpose" microprocessors, a combination of general and special purpose microprocessors, and/or ASICS. For example, the processor(s) may include one or more reduced instruction set (RISC) processors, such as a RISC processor manufactured by Samsung, as well as graphics processors, video processors, and/or related chip sets.

Embodiments of the electronic device may also include a memory. The memory may include a volatile memory, such as RAM, and a non-volatile memory, such as ROM. The memory may store the firmware for the device, such as an operating system for the device and/or any other programs or executable code necessary for the device to function. In addition, the memory may be used for buffering or caching during operation of the device.

The user interface may be displayed on the display, and may provide a means for a user to interact with the electronic device. The user interface may be a textual user interface, a graphical user interface (GUI), or any combination thereof, and may include various layers, windows, screens, templates, elements or other components that may be displayed in all of or areas of the display.

The device 10 may include a network device, such as a network controller or a network interface card (NIC). In one embodiment, the network device may be a wireless NIC providing wireless connectivity over any 802.11 standard or any other suitable wireless networking standard. The network device may allow the device to communicate over a network, such as a LAN, WAN, MAN, or the Internet. Further, the device may connect to and send or receive data with any device on the network, such as other portable electronic devices, personal computers, printers, etc. Alternatively, in some embodiments the electronic device may not include a network device 30. In such an embodiment, a NIC may be added into card slot to provide similar networking capability as described above.

Optimization of a GUI may be provided and displayed on the display of the device. One common technique for rendering the GUI, includes superimposing multiple layers over a background layer wherein each layer may contain unique views that include text, graphics, images, or other elements of the displayed GUI. The technique of superimposing layers to form the displayed GUI is commonly referred to as a "painter's algorithm."

The various layers and the particular views used in generating the GUI may be rendered by software operating on the processor(s), by the hardware, or by a combination of both.

The software of the invention is operable from any suitable electronic device, computer, computer system or related group of computer systems known in the art. In one embodiment, the software is installed upon a server or server computer system which is connected by at least one input/output port to a communication network. The communication network may be a local area network connecting a plurality of computers via any suitable networking protocol, including but not limited to Ethernet. In another embodiment, the communication network is the Internet and the system comprises server software capable of communicating with client computers via the Internet via any suitable protocol, including but not limited to HTTPS. In such case, the invention may be provided to a user as software as a service (SaaS) which will obviate a user from hardware needs such as a server and necessary server maintenance, security, etc. In one embodiment, a user may use a browser such as Internet ExplorerTM, Mozilla Firefox, Chrome or Safari, to browse on the server via the internet. Any processing device may be utilized, including for instance, a personal computer, a laptop, a PDA or a cellular phone.

The invention is embodied in any suitable programming language or combination of programming languages, including but not limited to: Google Web Toolkit, JAVA, database managers and MySQL.

Each software component can be implemented in a high-level procedural or object-oriented programming language, or in assembly or machine language if desired. The programming language may be a compiled or interpreted language.

Specific root music source files, temporary recordings taken by the various karaoke performers, and final product karaoke collage products, are entered into and saved in a database which may be any suitable database for storing data objects and metadata relating thereto. Any suitable database program may be used. In one embodiment, the database is a relational database and a key/value database. In one embodiment, database is a modified relational database. The search logic used for subsequent retrieval of experiments from the database, is any suitable step, process, function or series of steps, processes and functions known in the art for searching a database.

Each electronic device may display a graphical user interface (GUI) of the invention. The contents of the screens, the functionality of the system and the work process may be adjustable to a user's needs. The screen designs, terms and work process reflect the interests of a user and are user-friendly since they display and interact with the user in idiomatic simple syntax. Thus use of the system appears intuitive.

In some embodiments the invention is implemented in cloud computing using a remote server. Cloud computing refers to using a personal computer or PDA to access a server running the software of the invention, via the internet. The graphical interface of the application appears the same for all users and organizations, and uses the same database upon the server, however each user is identified according to an ID he is provided with, and can view only his secured data. Users can choose to share data with external users, or to work in a collaborative space set aside for all users.

Suitable processors for implementation of the invention include, by way of example, both general and special purpose microprocessors. Generally, a processor will receive instructions and data from a read-only memory and/or a random access memory.

Generally, a computer or electronic device useful for implementation of the invention will include one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EPROM, and flash memory devices; magnetic disks such as internal hard disks and removable disks; magneto-optical disks; and CD-ROM disks.

The invention extends to a carrier medium for carrying a computer readable code for controlling a communications device to carry out the method of any of the herein described embodiments.

Further embodiments of the invention are set out in the following clauses:
Clause 1) A method of automatically creating a karaoke collage performance, comprising:
   a) identifying segments of a predetermined song, said segments comprised of a specified chorus or a specified verse; said segments based on timing criteria;
   b) assigning metadata for said identified segments;
   c) providing a timeline for said predetermined song, based on said metadata;
   d) providing a user with a root music source file for said predetermined song;
   e) allowing said user to allocate segments upon said timeline to at least one participant karaoke singer;
   f) receiving at least one recorded karaoke performance in digital format;
   g) identifying all relevant recorded karaoke performances as related to a single karaoke collage according to said allocation timeline;
   h) synchronizing and mixing said recorded karaoke performances according to said timeline to create a unified karaoke collage performance.
Clause 2) Computer readable storage medium storing software adapted to perform the method of clause 1.
Clause 3) The method of clause 1, wherein said method is performed by a server computer hosting a suitable website.
Clause 4) The method of clause 1, wherein said method is performed by a user upon his personal electronic device.
Clause 5) The method of clause 1, wherein said recorded karaoke performance is performed by a user, and additional segments of said song are allocated by said user to one or more of the following group: the original performing artist, and a second participating karaoke singer.
Clause 6) The method of Clause 1, wherein said recorded karaoke performance is recorded by a user, using a personal electronic device selected from of the following: a personal computer, a laptop computer, a personal digital assistant (PDA), a mobile phone, a video camera adapted to record in digital format, and a portable digital media player.
Clause 7) The method of clause 1, wherein said recorded karaoke performance is selected from one or more of the following: an audio performance and an audiovisual performance.
Clause 8) The method of clause 1, wherein said step of allowing a user to allocate segments of said song comprises retrieving electronic mailing addresses from an address book stored on a user's personal electronic device.
Clause 9) The method of clause 1, wherein in said root music source file, indication is presented upon the display of a user's electronic device of the lyrics segment being played at a given time.
Clause 10) The method of clause 1, wherein said segments of said song are allocated to a plurality of singers, said clause 1, wherein upon creation of said karaoke collage, the sound level is automatically adjusted to allow all participating singers to be heard.
Clause 11) The method of clause 1, wherein said final karaoke collage performance is saved on a dedicated server computer.

Having described the present invention with regard to certain specific embodiments thereof, it is to be understood that the description is not meant as a limitation, since further modifications will now suggest themselves to those skilled in the art, and it is intended to cover such modifications as fall within the scope of the appended claims.

## Claims

1. A system for creating a karaoke collage performance, comprising a remote database including root music source files, said root music source files comprised of: background music, segment timing information, and lyrics of a plurality of songs;
the system being configured to:
a) receive a query from a device to obtain a root music source file of a predetermined song;
b) search in the remote database for the root music source file of said predetermined song;
c) send the root music source file of said predetermined song to said device of said user;
d) receive from at least one user a recorded karaoke performance and an allocation segment timeline for said predetermined song;
e) combine all recorded karaoke performances, based on said allocation timeline, to a single karaoke collage performance;
f) provide a user with access to said resultant karaoke collage performance.

2. The system of claim 1, wherein said device is selected from at least one of the following: a personal computer, a laptop computer, a personal digital assistant (PDA), a mobile phone, a video camera adapted to record in digital format, and a portable digital media player.

3. A method of creating a karaoke collage performance, comprised of:
a) providing a user, with a root music source file comprised of background music, segment timing information, and lyrics of a predetermined song, in digital format;
b) allowing a user to automatically allocate segments of said predetermined song to a plurality of singers;
c) receiving from a user at least one recorded karaoke performance; and receiving a timeline of allocation of segments of said song to a plurality of participating singers;
d) synchronizing and combining all recorded karaoke performances according to said segment allocation, to create a karaoke collage performance;
e) providing a user with access to said resultant karaoke collage performance.

4. The method of claim 3, wherein at least one additional recorded karaoke performance is received from a participating karaoke singer.

5. The method of any of claims 3 to 4, wherein said method is performed by a server computer hosting a suitable website.

6. The method of any of claims 3 to 4, wherein said method is performed by a user upon his personal device.

7. The method of any of claims 3 to 6, wherein said recorded karaoke performance is performed by a user, and additional segments of said song are allocated by said user to one or more of the following group: the original performing artist, and a second participating karaoke singer.

8. The method of any of claims 3 to 7, wherein said recorded karaoke performance is recorded by a user, using a personal device selected from one or more of the following: a personal computer, a laptop computer, a personal digital assistant (PDA), a mobile phone, a video camera adapted to record in digital format, and a portable digital media player.

9. The method of any of claims 3 to 8, wherein said recorded karaoke performance is selected from one or more of the following: an audio performance and an audiovisual performance.

10. The method of any of claims 3 to 9, wherein said step of allowing a user to allocate segments of said song comprises retrieving electronic mailing addresses from an address book stored on a user's personal electronic device.

11. The method of any of claims 3 to 10, wherein in said root music source file, indication is presented upon the display of a user's device of the lyrics segment being played at a given time.

12. The method of any of claims 3 to 11, wherein said segments of said song are allocated to a plurality of singers, said singers located at separate locations.

13. The method of any of claims 3 to 12, wherein upon creation of said karaoke collage, the sound level is automatically adjusted to allow all participating singers to be heard.

14. The method of any of claims 3 to 13, wherein said final karaoke collage performance is saved on a dedicated server computer.

15. A carrier medium for carrying a computer readable code for controlling a communications device to carry out the method of any of claims 3 to 14.
